# EUROPEAN PATENT APPLICATION

(11) **EP 4 826 990 A1**
(43) Date of publication of application: **21.10.2026**
(21) Application number: 26172777.0
(22) Date of filing: 16.04.2026
(51) Int. Cl.: H02S 40/44, H02S 20/25

(54) **BASIC PHOTOVOLTAIC-THERMAL (PVT) PANEL ROOF**

(30) Priority: 17.04.2025 NL 1045106
(71) Applicant: Benschop, Victor Stefan, 3958 BW Amerongen (NL)
(72) Inventor: Benschop, Victor Stefan, 3958 BW Amerongen (NL)
(74) Representative: V.O.

(57) **Abstract**

This innovation simplifies the Photovoltaic Thermal (PVT) Panel concept for tilted roofs by applying a clip that uses the PV carrier also as a heat collector. The clip (4) transfers collected heat into a conduit (3). The invention allows for cost effective tailoring of PVT panels to different sizes originating from roof integration needs for a single layer roof. The invention allows for thermal expansion of the panel while fixing it to the roof and facilitates quick installation of a conduit.

The innovation makes a tilted PVT roof substantially more cost effective than traditional PVT panels, that typically have a separate PV carrier and heat collector in standard sizes only.

## Description

### Field of the invention

The present invention is directed at roof construction and a method for such roof construction.

### Background

The energy transition is a change from fossil fuels to renewable energy.

In many countries, heat is a substantial part of the final energy consumption.

Ambient (outside) heat can be upgraded by a heat pump to heat, that can effectively be used to (inside) heat buildings. Ambient heat is a source of renewable energy, that is abundantly present in many countries and available for free. Hence harvesting ambient heat, as a source for final heat, potentially is a substantial part of the energy transition.

A commonly used ambient heat source is a roof of a building made of several PhotoVoltaic-Thermal (PVT) panels. In this concept, each PVT panel has a PhotoVoltaic (PV) surface that converts solar beams into heat and electricity. The PVT panels also collect ambient heat from surrounding air. Behind that PV surface, a similarly sized heat exchanger, typically a radiator, is placed that passes the collected heat onto a carrier fluid in a conduit. In a complete roof structure, all individual heat exchangers in such panels need to be connected using conduits and connectors during installation on a roof, which is both materials and labor intensive. For a deviation in size, a size change affects both the carrier of the PV layer and the heat exchanger, which is expensive to realise. As a consequence, flexibility in PVT panel size is expensive. Thus, the current industry best practice is to commercialise standardised size PVT panels, often on multi-layered roofs.

Roofs on existing buildings often consist of several parts, often integrated with one another and have foreign objects on them like chimneys and dormers.

For the mentioned reasons, currently, traditional PVT roofs are expensive and typically made using standard sized panels only, often covering only part of a total roof.

### Summary of the invention

It is an object of the present invention to provide a construction of PVT panels that greatly reduces costs while maintaining a large degree of efficiency..

To this end, there is provided herewith, in accordance with a first aspect of the invention, a photovoltaic-thermal roof construction comprising at least two photovoltaic-thermal panels a number of conduits, a number of clips for establishing a thermal bridge between the photovoltaic-thermal panels and the conduits, wherein each clip comprises a first support structure connected to a first photovoltaic-thermal panel, and a second support structure connected to a second photovoltaic-thermal panel, wherein the first support structure and the second support structure are attached to an attachment member of the clip, such as to form the thermal bridge for conducting heat from the first photovoltaic-thermal panel to the attachment member via the first support structure, and from the second photovoltaic-thermal panel to the attachment member via the second support structure, wherein one of the conduits is attached to the attachment member for absorbing heat from the attachment member, wherein each conduit of the photovoltaic-thermal roof construction is arranged for transporting a working fluid.

There are 5 main features of a sloped PVT roof for a building:
1) secure that the roof remains intact under outside weather conditions
2) form a layer that keeps the building below dry
3) collect and transfer ambient heat into a working fluid in a conduit
4) generate electricity
5) avoid material stress and noises due to thermal expansion.

The invention makes use of a clip that addresses the features as follows:
1) it attaches PVT panels to the roof structure in a weather proof way
2) it attaches that layer to the roof structure and is hence part of it
3) it is the intermediary between the PVT panels, acting as heat collectors and the working fluid in the conduit, as the heat transporter
4) it does itself not generate electricity but holds the panels that do
5) it fixes PVT panels to the roof structure while allowing it to thermally expand

Compared to a traditional PVT panel with a radiator, this concept uses a modest surface and is hence somewhat less efficient in heat transfer than a traditional PVT panel. The advantage of working with one single conduit per clip for several PV-panels, is the low materials and implementation costs, especially when different sizes of PVT panels are used. Producing radiators in tailor made sizes instead of standard sizes is expensive and of that reason not available in the market. A heat conductive clip can be produced in an inexpensive manner. With the invention, standard available conduits can be used in larger dimensions so as to avoid the connectors that are required for connecting the different radiators in traditional PVT. That is more cost effective and prevents risks of leakage.

Advantageously, despite a somewhat lower heat exchange efficiency per individual PVT-panel compared to traditional PVT panels, a total PVT roof made with such clips is still effective in the collection of ambient heat as source for final heat in buildings, according to the invention, because roofs generally have several tens of square meters of surface in total. With that, the number of PVT panels and clips augments. With that, the total surface for heat collection and exchange. With that, the total heat collected and transferred.

The clip comprises two support structures, each supporting a PVT-panel, while at the same time establishing thermal contact with a conduit that is attached to the attachment member of the clip. Hence heat is transported from the PVT panels via the support structures and the attachment member of the clip into the conduit that contains a working fluid. This way, collected heat becomes usable elsewhere, typically at, but not limited to, the location of a heat pump.

In accordance with some embodiments of the invention, the roof construction is a sloped roof construction, and the connections between the first support structure of each clip and the first photovoltaic-thermal panel, and between the second support structure of each clip and the second photovoltaic-thermal panel are arranged to position the second photovoltaic-thermal panel above the first photovoltaic-thermal panel in the sloped roof construction. The PVT panels are typically cascaded, imbricate, like a traditional ceramic tile structure. The total roof could optionally be staggered. Hence the clip typically supports one PVT panel above it and one panel below it, yet it could in larger versions also support more than one panel above and one or more than one panel below, in case these panels are placed in the same row alongside.

In accordance with some embodiments of the invention, the attachment member of each clip comprises a female connector, the conduits forming male connectors having complementary shapes with respect to the female connector, wherein the female connector and the male connector are configured for engaging with each other. The female and male connector are designed for two purposes: effective heat transfer and ease of installation. The industry best practice for the male connector, a conduit, is a round shape. Hence, the design of the female connector is similar, yet inverted to allow for a maximum of contact surface between the clip and the conduit, maximising heat transfer. This is the reason for the shapes chosen in the drawings and is meant as an example, not to exclude other shapes.

In accordance with some embodiments of the invention, the female connector is configured for engaging with the conduits via a snap-fit mechanism. The most cost effective heat conducting conduit available in the market is a round tube. To facilitate labor extensive (quick) installation on the roof, that allows for dismantling and re-installation later, a snap-fit mechanism was chosen.

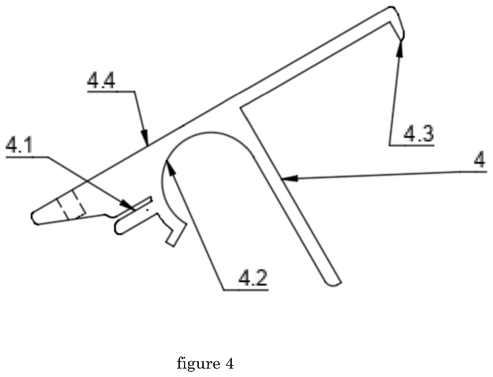

In accordance with some embodiments of the invention, the first support structure of each clip is connected to the first photovoltaic-thermal panel, such as to provide clearance for accommodating thermally induced movement of the first photovoltaic-thermal panel. The design of the clip is such that the requirement to avoid material stress and noises due to thermal expansion is met. Specifically thermal expansion in the direction of the angle of the tilted roof is catered for by a clearance that is sufficient to be effective. This clearance is more or less in the direction of the slope of the roof and can apply to the first (or lower) PVT panel. In the figure 4 that is addressed: the clip is shown in the angle of the slope of the roof and the slot is placed in parallel. This example is not meant to exclude other options or angles.

In accordance with some embodiments of the invention, the second support structure of each clip is connected to the second photovoltaic-thermal panel, such as to provide clearance for accommodating thermally induced movement of the second photovoltaic-thermal panel. There are 5 main features for a PVT panel roof (see claim 1) The design of the clip is such that these features are accomplished. Specifically thermal expansion can be catered for by a clearance that is sufficient to be effective.

In accordance with some embodiments of the invention, the clearance is provided by a slot of the clip, the slot being shaped for being inserted with a ridge of the photovoltaic-thermal panel. The clearance for thermal expansion is provided by a slot in the clip that such that PVT panels are thermally connected while at the same time can expand and shrink. Optionally a heat conducting paste or tape can improve the functions. Optionally the slot can be located in a separate part of the clip: retaining clip.

In accordance with some embodiments of the invention, the clips comprise a metal material. Metals have a high thermal coefficient, facilitating an effective heat transfer.

In accordance with some embodiments of the invention, the metal material is arranged for forming the thermal bridge. A suitable metal material is aluminium as it has both a high thermal coefficient and can be effectively and cost effectively be extruded into a shaped profile. The example of aluminium is not meant to restrict the use of other metals.

To facilitate an effective heat transfer under outdoor conditions, additional surface treatment of the metals could be applied, such that redox reactions do not hinder the heat transfer in the long run.

In accordance with some embodiments of the invention, each clip is fixed to one of a number of battens of the photovoltaic-thermal roof construction. A batten structure is a traditional structure to connect tiles to a roof. A batten structure is typically composed of a vertical layer of battens that are fixed directly to a roof boarding or an insulation structure with, on top of that, a horizontal layer of battens. Traditional ceramic roof tiles are supported by the above layer of battens and rest on it. The clips, as described in this invention, are attached to the horizontal layer of battens. The means of attachment typically are screws, as they allow for disassembly. This example is not meant to limit the use of other fasteners.

In accordance with a second aspect, there is provided herewith a method of constructing a photovoltaic-thermal roof construction, wherein the method comprises establishing a thermal bridge between at least two photovoltaic-thermal panels and a number of conduits, wherein said establishing of a thermal bridge is performed using a number of clips, wherein for each clip, the method comprises: connecting a first photovoltaic-thermal panel to a first support structure of the clip and connecting a second photovoltaic-thermal panel to a second support structure of the clip, wherein the first support structure and the second support structure are attached to an attachment member of the clip, such as to form the thermal bridge for conducting heat from the first photovoltaic-thermal panel to the attachment member via the first support structure, and from the second photovoltaic-thermal panel to the attachment member via the second support structure; and attaching one of the conduits to the attachment member of the clip for absorbing heat from the attachment member.

The invention can be installed on the roof with or without battens, with or without preassembled combination of PVT panels and clips. One example is detailed below. In case preassembled PVT panels and battens are used, vertical battens are placed on the exterior side of a tilted roof, onto the roof boarding. On top of the fully finished layer of vertical battens, the horizontal battens may be attached, typically with nails or screws. Onto the fully finished layer of horizontal battens, the various rows of PVT panels may be placed from the top row downwards by attaching a preassembled combination of PVT panel and clips onto the battens, typically with nails or screws, not excluding other fasteners. This may be done, per row of battens, such that first the ridge of the PVT panel can slide into the slot of the clips attached to the battens above the mentioned row. After that, the PVT panels may be attached to the mentioned row of battens, typically with nails or screws, not excluding other fasteners. This is one way to fully attach the PVT panel to the roof while still allowing for thermal expansion, preventing thermal stress and possible associated noises. Finally the conduit may be placed as the last step after completion of a full row, by clicking the conduit into the snap-fit connector of the clips. In case conduits are insufficiently long to cover the full width of the roof, they may need to be interconnected. Working with long conduits allows for saving connectors, and to reduce the time to install them and prevent the risks of malfunctions during the lifetime. Working with snap-on connections can reduce installation time. This example is not meant to exclude other methods, for example one where the clips and PVTs panel are attached to one another on the roof.

In accordance with some embodiments of the invention, the method further comprises filling each conduit with a working fluid. For a heat pump to effectively use the heat harvested by the PVT panels, the heat must be transported to that heat pump, which typically is located not on the roof but inside a building. As a working fluid, typically, yet not limited to, a mixture of water and glycol, can be used here.

In accordance with some embodiments of the invention, the step of connecting the first photovoltaic-thermal panel to the first support structure of the clip and connecting the second photovoltaic-thermal panel to the second support structure of the clip is performed, such that the second photovoltaic-thermal panel is positioned above the first photovoltaic-thermal panel, such as to yield a sloped roof construction.

The roof can be staggered.

In accordance with some embodiments of the invention, the step of attaching one of the conduits to the attachment member of the clip involves fixing the conduit into a female connector of the attachment member, the conduit forming a male connector having a complementary shape with respect to the female connector. Working with snap-on connections, or similar methods, reduces installation time and allows for decomposition and recomposition for maintenance purposes.

In accordance with some embodiments of the invention, in the step of connecting the first photovoltaic-thermal panel to the first support structure of the clip and connecting the second photovoltaic-thermal panel to the second support structure of each clip, at least one of the following: the first photovoltaic-thermal panel is connected to the first support structure of the clip, such as to provide clearance for accommodating thermally induced movement of the first photovoltaic-thermal panel; and the second photovoltaic-thermal panel is connected to the second support structure of the clip, such as to provide clearance for accommodating thermally induced movement of the second photovoltaic-thermal panel. A traditional PVT panel roof has individual radiators that all need to be interconnected using connectors and conduits, typically tubes. Typically several metal profiles form the basis for the traditional PVT panels: the PVT panels may for example be bolted to such profiles, often on multi-layered roofs. These embodiments provide a quick way, requiring less materials and labour to install PVT panels on a batten structure and hence is more cost effective.

In accordance with some embodiments of the invention, the clearance is provided by a slot of the clip, wherein the method comprises inserting a ridge of the photovoltaic-thermal panel into the slot. The ridge can typically be any flat part of the PVT tile. The ridge in these embodiments must extend into the slot to attach the PVT panel firmly into the slot, enable an effective heat transfer and still leave enough space for thermal expansion that can be expected under the local weather conditions in combination with the temperature that the cold side of the heat pump produces.

In accordance with some embodiments of the invention, the method comprises fixing each clip to one of a number of battens of the photovoltaic-thermal roof construction. These embodiments provide a quick way to install PVT panels on an inexpensive batten structure and hence is more cost effective than traditional PVT mounting methods, where typically several metal profiles for the basis for the panels and PVT panels are bolted to such profiles.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Parts have a unique number.
Features of parts have the part number, a point, a unique number.
Figures have a unique number (not related to parts) and a description.

### Detailed description

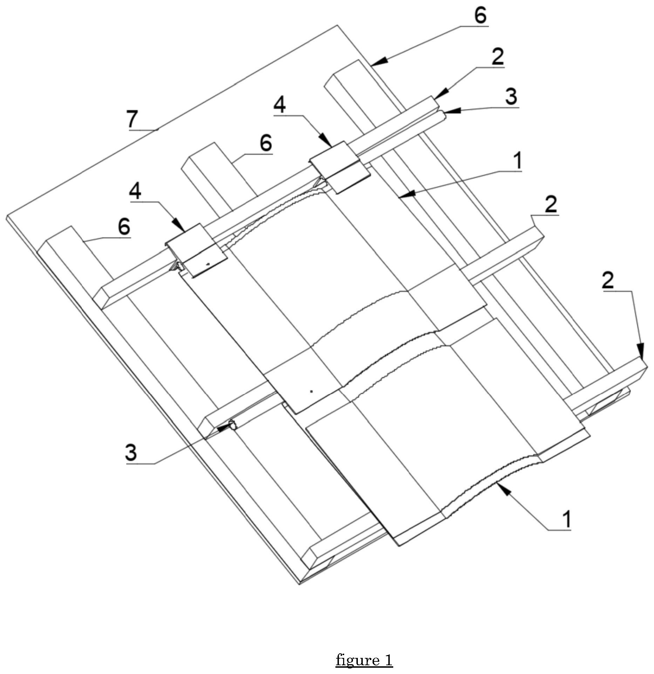

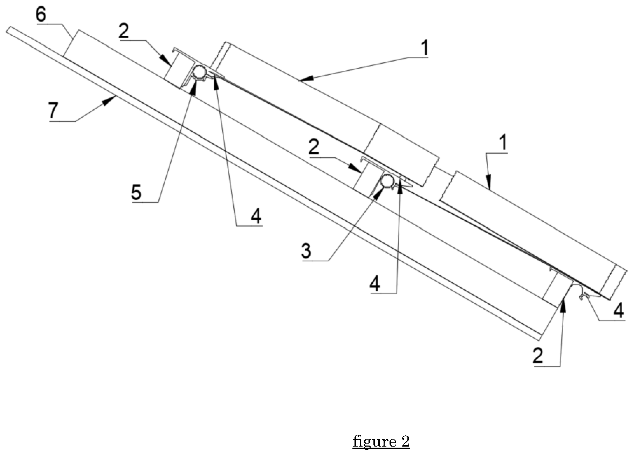

See figure 1 for an overview of the Basic PVT panel roof. Here the numbered parts are present and listed in the legend below. The retaining clip 5 is not visible in figure 1 and is introduced in figure 2. Some parts are drawn several times. They are copies of the same part.

Figure 1 shows an overview of the PVT panel roof. From the inside of the building outwards, the following components are shown:
roof boarding 7 this could be a wooden plate or an insulating material vertical batten 6. Here 3 pieces are drawn. The vertical battens typically are attached to the roof boarding with nails or screws and are also part of a traditional roof construction where ceramic tile are attached to horizontal battens 2 clips 4. Clips attach PVT panels to the horizontal battens 2 and perform a heat transfer function from PVT panels to a conduit 3 containing a working fluid. Clips are part of the innovation conduits 3. Two pieces of conduits are drawn horizontal battens 2. Three pieces of horizontal battens are shown.

They are typically made from wood and are attached to the vertical battens, also used in a traditional support structure for ceramic tiles PVT panels 1. PVT panels are part of the innovation as a heat collector and conductor. The PV layer that generates electricity is not part of the innovation. The innovation could also be used without a PV layer, purely for thermal reasons.

The battens 2 and roof boarding 7 are standard roof construction materials, typically made of wood and not detailed in a separate drawing. The conduits 3 are standard materials, typically made of metal and not detailed in a separate drawing. The retaining clip 5 is not visible in figure 1, it is in figure 2.

Figure 2 shows two PVT panels 1 mounted onto battens 2 using three clips 4. Conduits 3 are drawn here, in only two of the three clips 4 in order to show the clip without a conduit: see the lowest clip 4.

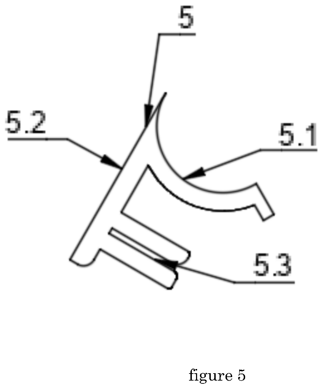

A retaining clip 5 is drawn only in the upper of the three clips. This is part of the innovation. It is an option for enhancing thermal conductivity from PVT panel 1 to working fluid inside the conduit 3 and is more detailed in figure 5.

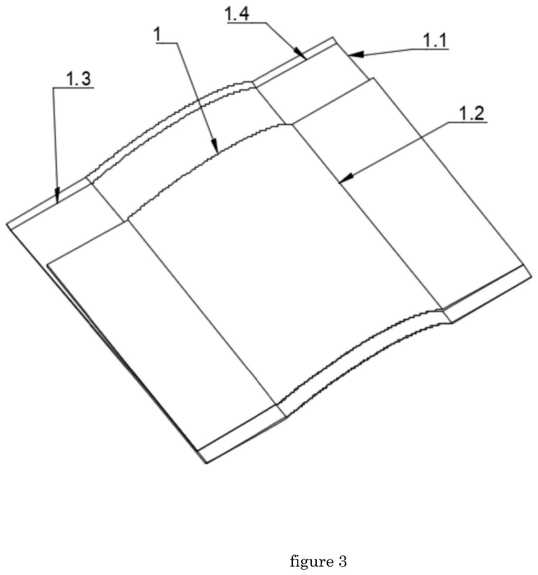

Figure 3 shows the PVT panel 1. The PVT panel has the following features: a PVT tile 1.1 a PV layer 1.2 a ridge A (1.3) and a ridge B (1.4). In this example, the PVT panel has flat parts and curved parts. Flat parts of one side of the panel are used as a ridge, e.g. ridge A (1.3), to fit into the slot of the clip 4.1. In figure 3 it is only flat parts of the upper side of the PVT tile 1.1. In case of a fully flat PVT tile (not shown here), the entire upper side could function as a ridge. The PVT tile needs to be heat conducting. This way the surface of the PVT panel works as an effective heat exchanger with ambient air and as a heat collector for direct solar arrays. The PVT tile therefor is typically made of steel, galvanised steel or aluminium, yet could be made of other heat conducting material that is effective in such a shape on a roof and cost effective. A PVT tile can vary in size and be as wide as the entire roof (one PVT panel per row) or be interconnected (or overlapping) with other tiles in a single row, typically to make the PVT roof rain proof.

For reasons of simplicity the PV layer 1.2 is not detailed, nor the electrical connections to make the PV part effective. Typically the PV layer is a PV foil, glued to the PVT tile, it could also be directly printed onto the PVT tile or, as a foil or other thin layer, attached differently.

Figure 4 shows a side view of the clip 4.

The clip is attached to the above PVT panel, typically using glue or rivets. Hence the top of the clip, the attachment member 4.4 is attached to the bottom side of the PVT panel 1. This can be seen in figure 2.

The clip also connects a lower PVT panel in the roof construction, via the slot. The slot 4.1 is designed such that the ridge of the PVT panel can be slided in, thus fixing it to the roof construction in any outside weather conditions, making thermal contact and allowing for thermal expansion.

The location of the slot in the clip determines the size of the air gap (open air due to height difference between rows of PVT panels) between cascaded PVT panels. Optionally the slot could also be located in the retaining clip 5 as this would enlarge the air gap and possibly improve the effectiveness of the collection of ambient heat as ambient air can more easily flow around the PVT panels, yet could make the construction less effective for transporting all raindrops into gutters.

The attachment member for conduit 4.2 is designed to attach and hold the conduit and establish thermal contact.

Finally a hook 4.3 a is used for temporarily holding the preinstalled combination of PVT panels and clips, during installation on the roof. This hook can be placed behind a batten to temporarily prevent the PVT panel from falling during installation, while it is not yet in it's final place.

Figure 5 shows a side view of the retaining clip 5 To improve thermal conductivity from the PVT panel to the working fluid inside the conduit, optionally a retaining clip 5 can be added to the clip 4.

The attachment member in the clip 4.2 (see figure 4) is made such that a conduit can be snap-fitted into it. That requires the attachment member does not fully enclose the conduit. This retaining clip ensures the conduit is fully enclosed, improving overall thermal conductivity. The retaining clip can be screwed, along the the clip, into the batten. In figure 5 the option of a slot located in the retaining clip (see above in details of the clip 4) is not shown, this is not meant as a limitation.

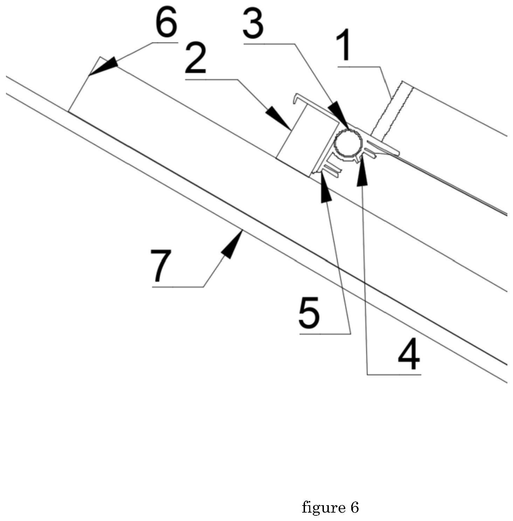

Figure 6 shows a detailed side view of clip 4 and retaining clip 5.

In this drawing the ridge 1.3 of the PVT panel 1 has been inserted into the slot 4.1 of the clip 4. Alternatively the ridge 1.3 could be inserted into the slot 5.3 (shown in figure 5) of the retaining clip 5 (shown in figure 6), thus creating a larger air gap and hence improving the heat collection function as air can move more freely around.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Photovoltaic-thermal roof construction comprising at least two photovoltaic-thermal panels, a number of conduits, and a number of clips for establishing a thermal bridge between the photovoltaic-thermal panels and the conduits,
wherein each clip comprises a first support structure connected to a first photovoltaic-thermal panel, and a second support structure connected to a second photovoltaic-thermal panel, wherein the first support structure and the second support structure are attached to an attachment element of the clip, such as to form the thermal bridge for conducting heat from the first photovoltaic-thermal panel to the attachment element via the first support structure, and from the second photovoltaic-thermal panel to the attachment element via the second support structure,
wherein one of the conduits is attached to the attachment element for absorbing heat from the attachment element, wherein each conduit of the photovoltaic-thermal roof construction is arranged for transporting a working fluid.

2. Photovoltaic-thermal roof construction according to claim 1, wherein the roof construction is a sloped roof construction, and
wherein the connections between the first support structure of each clip and the first photovoltaic-thermal panel, and between the second support structure of each clip and the second photovoltaic-thermal panel are arranged to position the second photovoltaic-thermal panel above the first photovoltaic-thermal panel in the sloped roof construction.

3. Photovoltaic-thermal roof construction according to claim 1 or 2, wherein the attachment element of each clip comprises a female connector, the conduits forming male connectors having complementary shapes with respect to the female connector, wherein the female connector and the male connector are configured for engaging with each other.

4. Photovoltaic-thermal roof construction according to claim 3, wherein the female connector is configured for engaging with the conduits via a snap-fit mechanism.

5. Photovoltaic-thermal roof construction according to any of the preceding claims, wherein the first support structure of each clip is connected to the first photovoltaic-thermal panel, such as to provide clearance for accommodating thermally induced movement of the first photovoltaic-thermal panel.

6. Photovoltaic-thermal roof construction according to any of the preceding claims, wherein the second support structure of each clip is connected to the second photovoltaic-thermal panel, such as to provide clearance for accommodating thermally induced movement of the second photovoltaic-thermal panel.

7. Photovoltaic-thermal roof construction according to claim 5 or 6, wherein the clearance is provided by a slot of the clip, the slot being shaped for receiving a ridge of the photovoltaic-thermal panel.

8. Photovoltaic-thermal roof construction according to any of the preceding claims, wherein the clips comprise a metal material.

9. Photovoltaic-thermal roof construction according to claim 8, wherein the metal material is arranged for forming the thermal bridge.

10. Photovoltaic-thermal roof construction according to any of the preceding claims, wherein each clip is fixed to one of a number of battens of the photovoltaic-thermal roof construction.

11. Method of constructing a photovoltaic-thermal roof construction, wherein the method comprises establishing a thermal bridge between at least two photovoltaic-thermal panels and a number of conduits, wherein said establishing of a thermal bridge is performed using a number of clips, wherein for each clip, the method comprises:
- connecting a first photovoltaic-thermal panel to a first support structure of the clip and connecting a second photovoltaic-thermal panel to a second support structure of the clip, wherein the first support structure and the second support structure are attached to an attachment element of the clip, such that a thermal bridge is formed for conducting heat from the photovoltaic-thermal panels to the attachment element; and
- attaching one of the conduits to the attachment element for absorbing heat from the attachment element.

12. Method according to claim 11, wherein the method further comprises filling each conduit with a working fluid.

13. Method according to claim 11 or 12, wherein the step of connecting the first and second photovoltaic-thermal panels to the clip is performed, such that the second photovoltaic-thermal panel is positioned above the first photovoltaic-thermal panel, such as to yield a sloped roof construction.

14. Method according to any of the claims 11-13, wherein the step of attaching one of the conduits to the attachment element of the clip comprises fixing the conduit into a female connector of the attachment element, the conduit forming a male connector having a complementary shape with respect to the female connector.

15. Method according to any of the claims 11-14, wherein in the step of connecting the photovoltaic-thermal panels to the clip, at least one of the following:
- the first photovoltaic-thermal panel is connected to the first support structure of the clip, such as to provide clearance for accommodating thermally induced movement of the first photovoltaic-thermal panel; and
- the second photovoltaic-thermal panel is connected to the second support structure of the clip, such as to provide clearance for accommodating thermally induced movement of the second photovoltaic-thermal panel.

16. Method according to claim 15, wherein the clearance is provided by a slot of the clip, wherein the method comprises inserting a ridge of the photovoltaic-thermal panel into the slot.

17. Method according to any of the claims 11-16, wherein the method comprises fixing each clip to one of a number of battens of the photovoltaic-thermal roof construction.
